# FASCICULE DE BREVET EUROPEEN

(11) **EP 0 469 343 B1**
(45) Date de publication et mention de la délivrance du brevet: **02.05.1997**
(21) Numéro de dépôt: 91111357.9
(22) Date de dépôt: 08.07.1991
(51) Int. Cl.: H01B 11/18, G02B 6/44

(54) **Câble électrique coaxial à fibres optiques**
Elektrisches Koaxialkabel mit optischen Fasern
Electrical coaxial cable with optical fibres

(30) Priorité: 11.07.1990 FR 9008837
(43) Date de publication de la demande: 05.02.1992
(73) Titulaire: FILOTEX S.A. dite, 91210 Draveil (FR); ALCATEL N.V., NL-1077 XX Amsterdam (NL)
(72) Inventeur: Vialle, François, F-91100 Corbeil Essonnes (FR); Raimbeaux, Jean-Michel, F-08230 Rocroi (FR); Thominet, Gérard, F-08170 Fumay (FR)
(74) Mandataire: Weinmiller, Jürgen

(56) Documents cités:
- DE-A- 3 522 694
- FR-A- 2 633 092
- US-A- 4 158 478

## Description

La présente invention concerne un câble électrique coaxial comportant au moins une fibre optique disposée entre son conducteur axial et son conducteur extérieur, entouré lui-même d'une gaine de protection.

On a déjà proposé divers types de câbles permettant la transmission simultanée de signaux électriques et de signaux optiques. Dans certains de ceux-ci, notamment dans les documents FR-A-2 337 411 et 2 358 735, les fibres optiques sont disposées entre le conducteur extérieur et une couche isolante, entourée elle-même d'une gaine. De tels câbles sont cependant nécessairement d'un assez gros diamètre, et donc d'un poids et d'un coût importants.

On a également proposé dans le document US-A-4 695 127 un câble coaxial comportant autour du conducteur axial un tube souple entouré par une tresse formant le conducteur extérieur. Le diamètre interne de ce tube est très supérieur à celui du conducteur axial, et une fibre optique est disposée à l'intérieur du tube entre celui-ci et le conducteur axial. Cette fibre optique risque cependant de subir des contraintes de traction, du fait de sa position sensiblement axiale.

On a par ailleurs proposé dans le document FR-A 2 633 092 un câble unipolaire d'énergie, comportant un conducteur axial, une gaine plastique autour du conducteur, une armure métallique autour de la gaine et un tube contenant des fibres optiques monté coulissant dans une rainure périphérique hélicoïdale prévue dans ladite gaine.

On a aussi proposé dans le document US-A- 4 158 478 un câble électrique coaxial, comportant des fibres noyées dans sa gaine diélectrique solide séparant ses deux conducteurs et réparties uniformément entre les deux conducteurs.

La présente invention a pour but de procurer un câble électrique coaxial autoporteur formant également câble optique, présentant un diamètre relativement faible, mais pouvant néanmoins comporter un nombre relativement important de fibres optiques et assurer une protection desdites fibres optiques contre les contraintes, notamment de traction ou de flexion, pouvant s'exercer sur le câble au cours de ses manipulations.

Elle a pour objet un câble électrique coaxial à fibres optiques, comportant un conducteur axial et un conducteur extérieur isolés l'un de l'autre et des fibres optiques disposées avec jeu dans au moins un tube de protection s'étendant hélicoïdalement entre lesdits conducteurs autour dudit conducteur axial, caractérisé en ce que cet au moins un tube de protection desdites fibres est un élément séparateur d'isolation, contribuant à l'isolation desdits conducteurs l'un de l'autre.

De préférence, ce câble comprend une pluralité de tubes enroulés hélicoïdalement jointivement autour du conducteur axial, et formant une première couche d'isolation entre les conducteurs.

Il comporte en outre de préférence au moins l'un des éléments suivants :
- une deuxième couche d'isolation entre le conducteur axial et les tubes de protection des fibres optiques,
- une troisième couche d'isolation entre les tubes de protection des fibres optiques et le conducteur extérieur,
- autour du conducteur extérieur, une protection extérieure formée par une gaine intermédiaire, et une couche de fils ou fibres de renfort mécanique, sous une gaine externe.

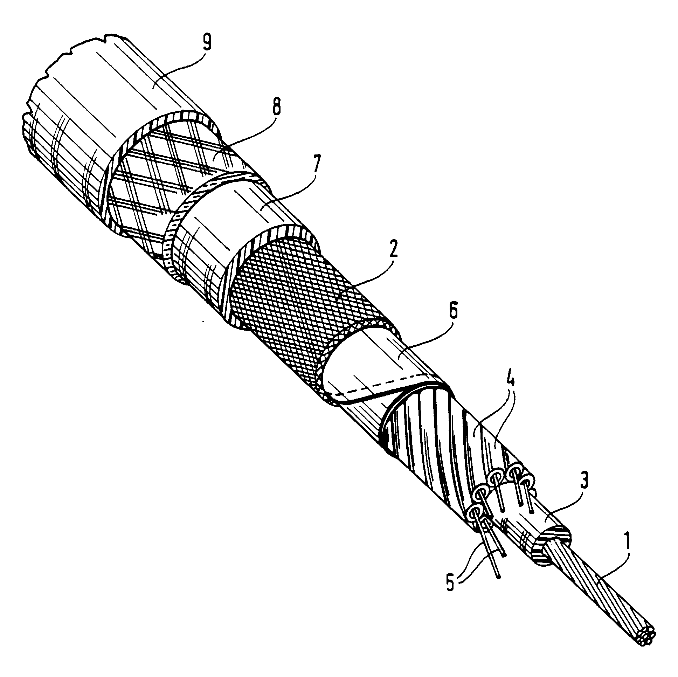

Il est décrit ci-après, à titre d'exemple et en référence à la figure unique du dessin annexé, un câble électrique coaxial et optique selon l'invention.

Le câble comprend un conducteur axial toronné 1 et un conducteur externe formé par une tresse 2.

Le conducteur axial 1 est de diamètre suffisant pour assurer la résistance à la traction désirée, comme représenté, ou il peut être renforcé par un fil axial métallique ou non, non représenté. Ce conducteur est entouré d'une couche 3 d'isolant électrique, tel que du polyéthylène. Autour de cette couche d'isolant sont enroulés hélicoïdalement les uns à côté des autres des tubes 4 de protection de fibres optiques 5, qui y sont logées avec jeu. Ces tubes sont entourés d'un ruban isolant 6 enroulé hélicoïdalement avec recouvrement de ses bords, les séparant du conducteur extérieur 2. Celui-ci est lui-même protégé par une gaine intermédiaire 7 en matière thermoplastique ou élastomère, elle-même enserrée dans un guipage 8 de fils d'acier ou de polyamide aromatique ou de fibres de verre, formant renfort mécanique contre les contraintes axiales, radiales ou de flexion. Enfin une gaine externe 9 en matière thermoplastique ou élastomère, ou éventuellement en plomb, assure l'étanchéité.

Les tubes 4 de protection des fibres sont en matériau non -conducteur. Ils peuvent assurer, sans la couche d'isolant 3 précitée et/ou sans le ruban isolant 6 précité, l'isolation et l'écartement convenables des deux conducteurs électriques coaxiaux du câble.

## Revendications

1. Câble électrique coaxial à fibres optiques comportant un conducteur axial (1) et un conducteur extérieur (2) isolés l'un de l'autre et des fibres optiques (5) disposées avec jeu dans au moins un tube de protection (4) s'étendant hélicoïdalement entre lesdits conducteurs autour dudit conducteur axial (1), caracterisé en ce que cet au moins un tube (4) de protection desdites fibres est un élément séparateur d'isolation, contribuant à l'isolation desdits conducteurs (1, 2) l'un de l'autre.

2. Câble selon la revendication 1, caractérisé en ce qu'il comporte une pluralité de tubes (4) de protection desdites fibres, entourant jointivemement les uns avec les autres ledit conducteur axial et formant une première couche d'isolation entre lesdits conducteurs.

3. Câble selon l'une des revendications 1 et 2, caractérisé en ce qu'il comporte une deuxième couche d'isolation (3) entre ledit conducteur axial et les tubes de protection desdites fibres.

4. Câble selon l'une des revendications 1 à 3, caractérisé en ce qu'il comporte une troisième couche d'isolation (6) entre les tubes de protection desdites fibres et ledit conducteur extérieur.

5. Câble selon l'une des revendications 1 à 4, caractérisé en ce qu'il comporte une protection extérieure (7, 8, 9), entourant ledit conducteur extérieur et formée par une gaine intermédiaire (7), et une couche de renfort mécanique (8), sous une gaine externe (9).

## Patentansprüche

1. Elektrisches Koaxialkabel mit Lichtleitfasern, das einen axialen Leiter (1) und einen Außenleiter (2), die gegeneinander isoliert sind, und Lichtleitfasern (5) aufweist, die lose in mindestens einem Schutzrohr (4) angeordnet sind, das sich spiralförmig zwischen den Leitern um den axialen Leiter (1) herum erstreckt, dadurch gekennzeichnet, daß dieses mindestens eine Schutzrohr (4) für die Fasern ein Isolierelement ist, das zur gegenseitigen elektrischen Isolierung der Leiter (1, 2) beiträgt.

2. Kabel nach Anspruch 1, dadurch gekennzeichnet, daß es mehrere Schutzrohre (4) für die Fasern aufweist, die aneinandergrenzend den axialen Leiter umgeben und eine erste Isolierschicht zwischen den Leitern bilden.

3. Kabel nach einem der Ansprüche 1 und 2, dadurch gekennzeichnet, daß es eine zweite Isolierschicht (3) zwischen dem axialen Leiter und den Schutzrohren für die Lichtleitfasern aufweist.

4. Kabel nach einem der Ansprüche 1 bis 3, dadurch gekennzeichnet, daß es eine dritte Isolierschicht (6) zwischen den Schutzrohren für die Lichtleitfasern und dem Außenleiter aufweist.

5. Kabel nach einem der Ansprüche 1 bis 4, dadurch gekennzeichnet, daß es um den Außenleiter einen äußeren Schutz (7, 8, 9) aufweist, der von einer Zwischenhülle (7) und einer mechanischen Verstärkungsschicht (8) zur (8) unter einer Außenhülle (9) gebildet wird.

## Claims

1. An electrical coaxial cable having optical fibers, the cable comprising an axial conductor (1) and an outer conductor (2) that are insulated from each other, and optical fibers (5) that are disposed with clearance in at least one protective tube (4) extending helically between said conductors around said axial conductor (1), the cable being characterized in that said at least one protective tube (4) for protecting said fibers is an insulating separator element contributing to insulating said conductors (1, 2) from each other.

2. A cable according to claim 1, characterized in that it includes a plurality of protective tubes (4) for said fibers touching one another and surrounding said axial conductor, forming a first layer of insulation between said conductors.

3. A cable according to claim 1 or 2, characterized in that it includes a second layer (3) of insulation between said axial conductor and the protective tubes for protecting said fibers.

4. A cable according to any one of claims 1 to 3, characterized in that it includes a third layer (6) of insulation between the protective tubes for protecting said fibers and said outer conductor.

5. A cable according to any one of claims 1 to 4, characterized in that it includes outer protection (7, 8. 9) surrounding said outer conductor and formed by an intermediate sheath (7) and a layer (8) of mechanical reinforcement under an outer sheath (9).
